# EUROPEAN PATENT SPECIFICATION

(11) **EP 3 486 213 B1**
(45) Date of publication and mention of the grant of the patent: **11.02.2026**
(21) Application number: 17890640.0
(22) Date of filing: 07.11.2017
(51) Int. Cl.: C01B 32/19, C05F 7/00, C01B 32/225

(54) **METHOD FOR PREPARING GRAPHENE BASED ON MULTI-PHASE QUANTUM SELF-COUPLING REACTION**
VERFAHREN ZUR HERSTELLUNG VON GRAPHEN AUF BASIS EINER MEHRPHASIGEN SELBSTKOPPLUNGSREAKTION
MÉTHODE DE PRÉPARATION DE GRAPHÈNE SUR LA BASE D'UNE RÉACTION D'AUTO-COUPLAGE QUANTIQUE MULTIPHASE

(30) Priority: 04.01.2017 CN 201710003737
(43) Date of publication of application: 22.05.2019
(73) Proprietor: Or, Leung Chit, Shatin, Hong Kong 999077 (CN)
(72) Inventor: LEUNG, Sze King James, Sheung Shui. N.T. Hong Kong 999077 (CN); SZETO, Yeuk Kee, Sheung Shui. N.T. Hong Kong 999077 (CN); OR, Leung Chit, Sheung Shui. N.T. Hong Kong 999077 (CN)
(74) Representative: Herrero & Asociados, S.L.
(86) International application number: PCT/CN2017/109718
(87) International publication number: WO 2018/126780

(56) References cited:
- CN-A- 104 787 759
- CN-A- 104 843 688
- CN-A- 104 860 300
- CN-A- 105 523 553
- CN-A- 106 145 099
- US-A1- 2014 154 770
- DATABASE WPI Week 201581, Derwent World Patents Index; AN 2015-58422K, XP002792911
- DATABASE WPI Week 201651, Derwent World Patents Index; AN 2016-22070W, XP002792912
- DATABASE WPI Week 201656, Derwent World Patents Index; AN 2016-316781, XP002792913
- DATABASE WPI Week 201604, Derwent World Patents Index; AN 2015-61683M, XP002792914

## Description

The present invention relates to the technical field of graphene, and more particularly to a graphene preparation method. The invention is set out in the appended set of claims.

Graphene is widely used. Graphene is obtained from graphite. Graphite is a crystalline form of the element carbon with its atoms arranged in a hexagonal structure.

The conventional graphene production method has high requirements for processing conditions. The conventional production method incurs high cost and produces harmful waste. So it lacks energy efficiency and environmental sustainability.

CN 104787758 A discloses a method for large-scale preparation of graphene. The method comprises adding a graphite intercalation compound powder to the composite expansion liquid, and then performing an expansion reaction at 20-50 °C for 2-4 hours to obtain a highly expanded worm-like graphene aggregate suspension. The obtained graphene powder has an impurity content of less than 2 wt%. The intercalation compound powder comprises 75% hydrogen peroxide, 10% peroxycarbonate, 10% non-ionic chelating agent and 5% olephillic agent.

CN 105460922 A discloses a partially reduced graphene oxide fluorescence resonance energy transfer nanoprobe and a preparation method thereof, comprising adding flake graphite to a mixed solution of concentrated sulfuric acid and phosphoric acid and adding a small amount of potassium permanganate several times.

CN 105591115 A discloses a method for preparing heteroatom-doped graphene-based material-loaded noble metal nanoparticles. The method comprises a step of preparing a heteroatom-doped graphene material and a step of preparing a hetero atom-doped graphene material-loaded noble metal nanoparticle.

CN 104860300 A discloses a preparation method of graphene. Graphite intercalation compound powder is proportionally added to the composite expansion liquid and then subjected to a swelling reaction to obtain a highly expanded worm-like graphene aggregate suspension.

The object of the present invention is to provide a graphene preparation method based on a technology, called "Polyphasic Quantum Self-coupled Reaction" or "PQRS" with low energy consumption and no pollution discharge.

This object is achieved by the subject matter of the independent claim.

Preferred embodiments of the invention are the subject matter of the dependent claims.

Compared with conventional technologies, the graphene preparation method based on the polyphasic quantum self-coupling reaction achieves exfoliation of graphene. PQSR is designed to couple the electronic phases of the three substances. The reactant promotes the disengagement of the affinity electronic force (Van der Waal Force) between the layers of graphite. As a result, flake graphite is exfoliated into graphene. No external energy source is required to initiate or sustain the reaction, resulting in superb energy saving compared to conventional graphene product methods. Because most of the materials are either consumed or easily separated, the final product is graphene with high purity, reserving the best properties of graphene itself while leaving no harmful discharge to the environment. Furthermore, the production cost is extremely low so the proliferation of graphene materials can be made possible.

### Embodiment 1

The present invention provides a graphene preparation method comprising steps of:
50g flake graphite powder are thoroughly mixed with 500ml intercalating agent. Then 50ml reagent solution are added into a mixture of the flake graphite powder and the intercalating agent. The resulting mixture is thoroughly stirred for reacting, so as to obtain no more than five layers of graphene. The flake graphite powder, the intercalating agent and the reagent solution form a coexistence state of the three electronic phases. Electronic phase resonance is induced among the materials. A large amount of energy in the form of vibration and heat across interfaces between layers of carbon atoms is released, resulting in exfoliation of graphene. The thorough permeation of the intercalating agent ensures that the electronic phase resonance can be induced in most layer interfaces, achieving few layer graphene which is equivalent to 5 layers or less. Byproducts of the three-phase auto-coupling energy reaction comprise water vapor, oxygen, and liquid containing organic chelates, wherein the water vapor and the oxygen are directly discharged, while the liquid containing the organic chelates could be further synthesized into organic fertilizers for agricultural productions.

In the embodiment 1, a purity of the flake graphite powder is 99.99%.

In the embodiment 1, according to volume fraction, the intercalating agent comprises 75% of hydrogen peroxide (i.e., high oxygen water), 10% of peroxycarbonate, 10% of a non-ionic chelating agent and 5% of an oleophilic hydrophilic agent (i.e., an agent being oleophilic and hydrophilic).

In the embodiment 1, according to volume fraction, the reagent solution comprises 50% of (NH4)4·EDTA and 50% of diethylenetriaminepentaacetic acid.

### Embodiment 2

The present invention provides a graphene preparation method comprising steps of:
150g flake graphite powder are thoroughly mixed with 1000ml intercalating agent. Then 100ml reagent solution are added into a mixture of the flake graphite powder and the intercalating agent. The resulting mixture is thoroughly stirred for reacting, so as to obtain no more than five layers of graphene. The flake graphite powder, the intercalating agent and the reagent solution form a coexistence state of the three electronic phases. Electronic phase resonance is induced among the materials. A large amount of energy in the form of vibration and heat across interfaces between layers of carbon atoms is released, resulting in exfoliation of graphene. The thorough permeation of the intercalating agent ensures that the electronic phase resonance can be induced in most layer interfaces, achieving few layer graphene which is equivalent to 5 layers or less. Byproducts of the three-phase auto-coupling energy reaction comprise water vapor, oxygen, and liquid containing organic chelates, wherein the water vapor and the oxygen are directly discharged, while the liquid containing the organic chelates could be further synthesized into organic fertilizers for agricultural productions.

In the Embodiment 2, a purity of the flake graphite powder is 99.99%.

In the Embodiment 2, according to volume fraction, the intercalating agent comprises 75% hydrogen peroxide (i.e., high oxygen water), 10% of peroxycarbonate, 10% of a non-ionic chelating agent and 5% of an oleophilic hydrophilic agent (i.e., an agent being oleophilic and hydrophilic).

In the Embodiment 2, according to volume fraction, the reagent solution comprises 50% of (NH4)4·EDTA and 50% of diethylenetriaminepentaacetic acid.

Compared with conventional technologies, the graphene preparation method based on the poly-phasic quantum self-coupling reaction of the present invention has phase combination in three aspects, wherein the energy of the auto-coupling reaction of multi-phase electron flows is combined with self-owned quantum resonance principles to separate the flake graphite and form the graphene. The method not only reduces energy consumption, but also provides fine layers of graphene with a high purity. Utilizing the electronic phases of various substances and the different quantum resonance basis of each substance, the internal energy is pulled out in the electron flow of a reaction, which produces acceleration of the auto-coupling electron energy reaction. Impulse between the electrons, phase reaction, and auto-coupling symbiotic electric energy reaction produce a large amount of energy which is converted into the heat energy. The increase in temperature promotes the disengagement of the affinity electronic force. As a result, energy loss flake graphite is generated. Due to an auto-coupling reaction, the electrons self-coupled with each other generate power, so that the scales can be released from the electron affinity energy, and then the scales are detached to form the graphene. The present invention is safe and eco-friendly, which achieves low energy consumption and zero pollution discharge. Furthermore, the production cost is extremely low, and current or future supply demands for graphene materials can be satisfied.

## Claims

1. A graphene preparation method comprising steps of:
thoroughly mixing flake graphite powder with an intercalating agent to form a premix, then adding a reagent solution into the premix and thoroughly stirring for reaction to begin, so as to produce graphene having five layers or less; wherein three different phases of the flake graphite powder, the intercalating agent and the reagent solution coexist; resulting in exfoliation of the graphene having five layers or less; the purity of the flake graphite powder is 99.99%; the intercalating agent comprises 75% high oxygen water, 10% of peroxycarbonate, 10% of a non-ionic chelating agent and 5% of an agent being oleophilic and hydrophilic.

2. The graphene preparation method, as recited in claim 1, wherein contents of a three-phase mixed reaction are:
the flake graphite powder of 50-150g;
the intercalating agent of 500-1000ml; and
the reagent solution of 50-100ml.

3. The graphene preparation method, as recited in claim 1 or 2, wherein according to volume fraction, the reagent solution comprises 50% of (NH4)4·EDTA (Ethylenediaminetetraacetic acid) and 50% of diethylenetriaminepentaacetic acid.

4. The graphene preparation method, as recited in claim 2, wherein byproducts of the three-phase auto-coupling energy reaction comprise water vapor, oxygen, and liquid containing organic chelates, wherein the water vapor and the oxygen are directly discharged, while the liquid containing the organic chelates is further synthesized into organic fertilizers for agricultural productions.

## Patentansprüche

1. Ein Verfahren zur Herstellung von Graphen, umfassend die Schritte:
gründliches Mischen von blättrigem Graphitpulver mit einem Interkalationsmittel zur Bildung einer Vormischung,
anschließendes Zugabe einer Reagenzlösung zu der Vormischung und gründliches Rühren zur Initiierung einer Reaktion,
wodurch Graphen mit fünf oder weniger Schichten erzeugt wird;
wobei drei verschiedene Phasen - das blättrige Graphitpulver, das Interkalationsmittel und die Reagenzlösung - gleichzeitig vorliegen,
was zur Exfoliation des Graphens mit fünf oder weniger Schichten führt;
wobei die Reinheit des blättrigen Graphitpulvers 99,99 % beträgt;
und wobei das Interkalationsmittel 75 % hochkonzentriertes Wasserstoffperoxid, 10 % Peroxycarbonat, 10 % ein nichtionisches Chelatbildner und 5 % ein sowohl oleophiles als auch hydrophiles Mittel umfasst.

2. Das Verfahren zur Herstellung von Graphen nach Anspruch 1, wobei die Mengen der dreiphasigen Mischungsreaktion betragen:
50-150 g blättriges Graphitpulver,
500-1000 ml Interkalationsmittel und
50-100 ml Reagenzlösung.

3. Das Verfahren zur Herstellung von Graphen nach Anspruch 1 oder 2, wobei die Reagenzlösung, bezogen auf das Volumen,
50% (NH₄)₄·EDTA (Ethylendiamintetraessigsäure) und
50% Diethylentriaminpentaessigsäure umfasst.

4. Das Verfahren zur Herstellung von Graphen nach Anspruch 2, wobei die Nebenprodukte der dreiphasigen Autokopplungsenergiereaktion Wasserdampf, Sauerstoff und eine Flüssigkeit enthaltend organische Chelate umfassen,
wobei der Wasserdampf und der Sauerstoff direkt abgegeben werden,
während die Flüssigkeit, die die organischen Chelate enthält, weiter zu organischen Düngemitteln für die landwirtschaftliche Produktion verarbeitet wird.

## Revendications

1. Procédé de préparation de graphène comprenant les étapes suivantes : mélanger de manière homogène une poudre de graphite en flocons avec un agent d'intercalation pour former un prémélange, puis ajouter une solution réactive audit prémélange et agiter de façon approfondie pour initier une réaction, de manière à produire du graphène comportant cinq couches ou moin;
dans lequel trois phases distinctes - la poudre de graphite en flocons, l'agent d'intercalation et la solution réactive - coexistent, entraînant ainsi l'exfoliation du graphène comportant cinq couches ou moins;
la pureté de la poudre de graphite en flocons étant de 99,99%;
l'agent d'intercalation comprenant 75% d'eau oxygénée concentrée, 10% de peroxyde de carbonate, 10% d'un agent chélatant non ionique et 5% d'un agent à la fois oléophile et hydrophile.

2. Procédé de préparation de graphène selon la revendication 1, dans lequel les quantités utilisées dans la réaction triphasée sont les suivantes:
50 à 150 g de poudre de graphite en flocons,
500 à 1000 ml d'agent d'intercalation, et
50 à 100 ml de solution réactive.

3. Procédé de préparation de graphène selon la revendication 1 ou 2, dans lequel, en fraction volumique, la solution réactive comprend 50 % de (NH₄)₄·EDTA (acide éthylènediaminetétraacétique) et 50 % d'acide diéthylènetriaminepentaacétique.

4. Procédé de préparation de graphène selon la revendication 2, dans lequel les sous-produits de la réaction triphasée à couplage énergétique automatique comprennent de la vapeur d'eau, de l'oxygène et un liquide contenant des chélates organiques, la vapeur d'eau et l'oxygène étant directement rejetés, tandis que le liquide contenant les chélates organiques est ultérieurement transformé en engrais organiques destinés à la production agricole.
